# NEUE EUROPÄISCHE PATENTSCHRIFT

(11) **EP 3 924 291 B2**
(45) Veröffentlichungstag und Bekanntmachung des Hinweises auf die Entscheidung über den Einspruch: **24.06.2026**
(45) Hinweis auf die Patenterteilung: 13.09.2023
(21) Anmeldenummer: 20703222.8
(22) Anmeldetag: 03.02.2020
(51) Int. Cl.: B66F 9/06, B66F 9/075, B66F 9/24, G05D 1/02

(54) **FÖRDEREINRICHTUNG FÜR LADUNGSTRÄGER**
CONVEYOR DEVICE FOR LOAD CARRIER
CONVOYEUR POUR PORTE-CHARGES

(30) Priorität: 15.02.2019 DE 102019001125; 01.03.2019 DE 102019001455
(43) Veröffentlichungstag der Anmeldung: 22.12.2021
(60) Teilanmeldung: 23196454.5
(73) Patentinhaber: Filics GmbH, 81379 München (DE)
(72) Erfinder: KOLLS, Gregor, 80807 München (DE); LUTZER, Johannes Julius, 80805 München (DE)
(74) Vertreter: SSM Sandmair
(86) Internationale Anmeldenummer: PCT/EP2020/052583
(87) Internationale Veröffentlichungsnummer: WO 2020/164942

(56) Entgegenhaltungen:
- DE-A1- 102007 046 868
- DE-A1- 102014 017 254
- DE-A1- 102015 010 718

## Beschreibung

Die Erfindung betrifft eine Fördereinrichtung zum Fördern von beladenen und unbeladenen Ladungsträgern und einen Ladungsträger. Die Fördereinrichtung weist eine erste Fördereinheit und eine zweite Fördereinheit auf, wobei beide Fördereinheiten unabhängig voneinander verfahren können. Der Ladungsträger ist eine Palette, wobei die Palette zwei Lichtraumtunnel in Längs-Orientierung aufweist.

Die erste und die zweite Fördereinheit können sich dabei jeder Zeit, eigenständig oder gepaart als Fördereinrichtung, autonom beispielsweise innerhalb einer Halle bewegen. Eine solche Fördereinrichtung ist beispielsweise aus der DE 10 2007 046 868 A1 bekannt, wobei zwei Fördereinheiten eine Fördereinrichtung bilden. Eine derartige Fördereinrichtung ist dazu konzipiert, Ladungsträger, insbesondere Paletten, zu unterfahren, mithilfe einer Hub-/Senkeinheit zu heben, im angehobenen Zustand zu einem Ort zu fördern und wieder abzusetzen. Dabei kann jede Fördereinheit in ihrer Dimension so ausgestaltet sein, dass sie das Lichtraumprofil der Ladungsträger unterfahren kann.

Aus der DE 10 2008 014 877 A1 ist eine weitere beispielhafte Ausführung der Fördereinrichtung bekannt, wobei dieses System das automatische Verladen von Paletten in Lastkraftwagen ermöglicht. Hierzu bilden zwei Transportwagen ein Transportwagenpaar, welche Paletten unterfahren, diese anheben und fördern kann. Eine derartige Fördereinheit ist mit einem elektrischen Zuleitungskabel zur Energieversorgung versehen, wobei das Kabel auch als Zugseil verwendet werden kann, um Fahrwegkorrekturen vorzunehmen.

Ein kabelloses Fördersystem ist für eine uneingeschränkte Flexibilität notwendig. Dazu müssen alle notwendigen Bestandteile der Fördereinheit, eine Steuerungseinheit, mindestens eine Hub-/Senkeinheit, eine Energieversorgung und mindestens eine Antriebseinheit, bestehend aus mindestens einem angetriebenen Rad in jede Fördereinheit integriert werden. Somit ist eine hoch integrierte Bauweise erforderlich.

Für eine derartige Fördereinrichtung ist zwingend eine Kollisionswarnung erforderlich, um in nicht abgeschlossenen oder nicht eingezäunten Bereichen und somit im Umfeld von Personen zu arbeiten. Eine Möglichkeit zur Kollisionswarnung könnten dabei Detektionseinrichtungen sein. Ohne eine solche Detektionseinrichtung ist eine Anwendung wie beispielsweise in Produktions- oder Logistikbetrieben, welche keine Hallenabgrenzung vorgesehen haben, unmöglich. Besonders vorteilhaft ist es, wenn die Kollisionswarnung für jede beliebe Fahrtrichtung vorgesehen ist und somit die gesamte Flexibilität der Fördereinrichtung, beispielsweise das seitliche Verfahren der Fördereinrichtung, genutzt werden kann. Des Weiteren muss eine bodennahe Kollisionswarnung eine hohe Robustheit gewährleisten. Ferner ist für die flexible Fördereinheit eine Orientierung im Umfeld notwendig. Dafür können verschiedene Leitsysteme vorgesehen werden. Beispielsweise können dafür Bodenmarkierungen verwendet werden, auf welche die Fördereinheit verfährt. Jedoch schränken diese die Flexibilität des Systems erneut stark ein.

Aus der DE 10 2015 010 718 A1, die eine Fördereinrichtung gemäß dem Oberbegriff des unabhängigen Anspruchs 1 offenbart, ist eine radarbasierte, richtungsgebundene Detektionseinrichtung für Fördereinheiten einer Fördereinrichtung bekannt.

Es ist eine Aufgabe der Erfindung eine Fördereinrichtung und Ladungsträger bereit zu stellen, welche ein flexibles, effektives und gleichzeitig kollisionssicheres Fördern von Ladungsträgern ermöglicht.

Die Aufgabe wird erfindungsgemäß durch die Merkmale des Anspruchs 1 gelöst. Vorteilhafte Weiterbildungen ergeben sich aus den abhängigen Ansprüchen, der Beschreibung und den Figuren.

Erfindungsgemäß weist dabei eine Fördereinrichtung der eingangs genannten Art, mindestens zwei Fördereinheiten auf. Diese sind vorteilhafterweise baugleich ausgebildet. Je nach Einsatzgebiet können die Fördereinheiten aber auch unterschiedlich ausgebildet sein, wobei jede Fördereinheit jeweils mindestens ein Fahrwerk, ein Tragelement, eine Hub-/Senkeinheit, ein Sensorsystem, ein Antriebssystem und mindestens eine vom Antriebssystem antreibbare Bodenrolle umfasst.

Erfindungsgemäß ist die Anordnung des Sensorsystems der jeweiligen Fördereinheit dadurch gekennzeichnet, dass sich eine Detektionsebene des Sensorsystems bei angehobenen Ladungsträger, unter dem Ladungsträger hindurch erstreckt und die Detektionsebene den Ladungsträger im nicht-gehobenen Zustand schneidet. Mit anderen Worten wird durch die Anordnung des Sensorsystems, bei angehobenem Ladungsträger, eine Umfeldserfassung auch außerhalb des Ladungsträgerumrisses ermöglicht. Gegensätzlich zu dem gehobenen Zustand, bei welchem sich die Detektionsebene unter dem Ladungsträger hindurch erstreckt, schneidet die Detektionsebene des Sensorsystems der Fördereinheit den Ladungsträger im nicht-gehobenen Zustand.

Der gehobene Zustand beschreibt den Zustand, bei welchem ein beliebiger Ladungsträger bevorzugt auf den Tragelementen der Fördereinheiten einer Fördereinrichtung aufliegt und so durch die Fördereinrichtung angehoben wird, dass der Ladungsträger keinen Bodenkontakt mehr hat. Zusätzlich oder alternativ können die Tragelemente auch kraftschlüssig und/oder formschlüssig mit dem Ladungsträger verbunden sein, so dass der Ladungsträger im gehobenen Zustand aufgrund der Verbindung zwischen den Tragelementen der Fördereinheiten der Fördereinrichtung und dem Ladungsträger durch die Fördereinrichtung angehoben wird. Der gehobene Zustand kann gleichzeitig auch der Zustand sein, bei welchem die Hub-/Senkeinheit das Tragelement maximal oder zumindest zu einem Großteil, also zu mehr als 50% des maximalen Fahrwegs der Hub-/Senkeinheit, angehoben hat.

Der nicht-gehobene Zustand bezeichnet den Zustand, bei welchem der Ladungsträger auf dem Boden aufliegt, also nicht durch die Fördereinrichtung angehoben wird. Der nicht-gehobene Zustand kann auch all die Zustände umfassen, bei denen der Ladungsträger zwar auf den Tragelementen der Fördereinheiten der Fördereinrichtung aufliegt und/oder mit den Tragelementen form- und/oder kraftschlüssig verbunden ist, aber der Ladungsträger noch Bodenkontakt hat. Vorteilhafterweise weist jede Fördereinheit der Fördereinrichtung im nicht-gehobenen Zustand eine minimale Bauhöhe auf. Mit anderen Worten kann die Hub-/Senkeinheit das Tragelement im nicht gehobenen Zustand maximal abgesenkt haben.

Ferner bezeichnet der Begriff "Umfeldserfassung" im Folgenden die Detektion von Parametern der Umgebung (Umgebungsparameter). Die Umgebungsparameter sind vorteilhafterweise optisch erfassbare Relativmerkmale der Umgebung in Bezug auf Fördereinrichtung. Insbesondere kann es sich hierbei um Abstände und/oder Richtungen von Hindernissen, beispielsweise Personen, Wänden oder Gegenständen, in der Umgebung bzw. im Umfeld der Fördereinrichtung handeln. Die Umgebungsparameter können aber auch andere kennzeichnende Merkmale der Umgebung bzw. des Umfelds sein, beispielsweise thermische Merkmale und/oder elektromagnetische Merkmale.

Durch eine anspruchsgemäße Fördereinrichtung können Kollisionen bei jeder beliebigen Förderrichtung vermieden werden. Bei einer Ausführung, in welcher die Antriebseinheiten frei drehbar sind, kann somit in jede beliebige Richtung kollisionssicher verfahren und die vollständige Flexibilität eines solchen Systems genutzt werden. Dies ermöglicht auch ein seitliches Verfahren der Palette, welches ein besonders platzsparendes Manövrieren ermöglicht. Dies ist ein einzigartiger Vorteil für heutige oder zukünftige Betriebe.

Eine besonders vorteilhafte und kostengünstige Ausführung liegt vor, wenn das Sensorsystem jeder Fördereinheit eine Sensoreinheit aufweist. Alternativ kann das Sensorsystem auch aus mehreren Sensoreinheiten, also aus mindestens zwei Sensoreinheiten, bestehen. Bei einer derartigen Weiterentwicklung ermittelt das Sensorsystem die Umgebungsparameter aus der Zusammenschau der Umgebungsparameter, welche durch die Vielzahl von Sensoreinheiten detektiert werden. Die Zusammenschau kann insbesondere in Abhängigkeit der jeweiligen Erfassungsbereiche der einzelnen Sensoreinheiten erfolgen. Beispielsweise könnten Umgebungsparameter, welche in überlappenden Erfassungsbereichen erfasst werden, zur Überprüfung der Umgebungsparameter der anderen Sensoreinheit genutzt werden. Dies kann die Genauigkeit der Umgebungsparameter im überlappenden Erfassungsbereich erheblich erhöhen. Die im nicht-überlappenden Erfassungsbereichen detektierten Umgebungsparameter könnten sich derart ergänzen, dass der Gesamterfassungsbereich des Sensorsystems maximiert wird.

Bei einer Ausführungsform mit zwei Sensoreinheiten sind die Sensoreinheiten vorteilhafterweise punktgespiegelt um den Mittelpunkt der Fördereinheit angeordnet.

Besonders vorteilhaft ist es, wenn das Sensorsystem ein optisches System ist. In diesem Fall würde es sich bei allen Sensoreinheiten des Sensorsystems um optische Sensoreinheiten handeln. Beispielsweise wären laserlichtbasierte und/oder kamerabasierte Sensoreinheiten denkbar. Ein Vorteil dieses optischen Systems ist die mögliche Echtzeitfähigkeit.

Alternativ könnte das Sensorsystem aber auch als hybrides System ausgebildet sein. Insbesondere könnte das Sensorsystem optische Sensoreinheiten und/oder thermische Sensoreinheiten und/oder magnetische Sensoreinheiten und/oder radarbasierte Sensoreinheiten und/oder mechanische Sensoreinheiten, beispielsweise Berührungssensoren, umfassen.

Grundsätzlich kann es sich bei einer Sensoreinheit um eine kombinierte Sende- und Empfangseinrichtung handeln.

Eine besonders vorteilhafte Ausführung ist es, wenn das Sensorsystem dabei innerhalb der Detektionsebene einen Raumwinkelbereich von ≥ 5° zur Längsachse einschließt. Der bevorzugte allgemeinen Erfassungsbereich einer Sensoreinheit liegt zwischen 180° und 280°, insbesondere zwischen 250° und 270°.

Bei einer vorteilhaften Weiterentwicklung, bei welcher das Sensorsystem mehrere Sensoreinheiten aufweist, sind die Sensoreinheiten so angeordnet, dass das Sensorsystem aus der Summe aller Erfassungsbereiche der einzelnen Sensoreinheiten einen Gesamterfassungsbereich von 360° abdeckt.

Bei einer Weiterentwicklung kann es von Vorteil sein, wenn der Winkel zwischen der Detektionsebene und dem Boden (Kippwinkelbereich) kleiner ±5°, insbesondere 0° und somit parallel zum Boden, ist. Alternativ kann der Kippwinkelbereich sich aber auch von -90° bis + 90° erstrecken. Eine solche Ausführungsform ist beispielsweise dann von Vorteil, wenn durch das Sensorsystem auch höher gelegene Hindernisse und/oder kleinere Hindernisse auf abschüssigem Untergrund zu detektieren sind. Auch bei einem kamerabasierten Sensorsystem kann ein solcher Kippwinkelbereich die Detektion von Umgebungsparametern vorteilhaft beeinflussen.

Die Fördereinheit besteht aus mindestens einem Fahrwerk und mindestens einem Tragelement, welches durch eine Hub-/Senkeinheit vertikal gegenüber dem Fahrwerk verfahren werden kann. Das Sensorsystem kann dabei vertikal unabhängig vom Tragelement angeordnet sein. Bei einer besonders vorteilhaften Ausführungsform ist das Sensorsystem mit dem Fahrwerk verbunden.

Bei einer beispielhaften Ausführungsform liegt der Ladungsträger im gehobenen Zustand auf den Tragelementen der Fördereinheiten einer Fördereinrichtung auf. Mit anderen Worten sind die Tragelemente durch die Gewichtskraft des Ladungsträgers mit dem Ladungsträger kraftschlüssig verbunden. Zusätzlich kann ein Tragelement ein oder mehrere Verbindungselemente aufweisen, welche gegen den Ladungsträger gedrückt werden, um eine weitere zusätzliche kraftschlüssige Verbindung herzustellen. Die Verbindungselemente können vorteilhafterweise seitlich vom Tragelement angeordnet sein. Alternativ oder zusätzlich kann das Tragelement und/oder die ein oder mehreren Verbindungselemente dazu ausgebildet sein eine formschlüssige Verbindung mit dem Ladungsträger herzustellen. Dies ist insbesondere dann der Fall, wenn der zu fördernde Ladungsträger Aufnahmeelemente aufweist, in welche das Tragelement und/oder die ein oder mehreren Verbindungselemente eingreifen können.

Eine weitere vorteilhafte Ausführung der Fördereinheit ist es, wenn die Höhe zwischen der oberen Auflagefläche des Ladungsträgers und der Detektionsebene größer als 10 cm ist. Hierdurch wird sichergestellt, dass die Detektionsebene unterhalb des Ladungsträgers verläuft.

Die Anordnung der beispielsweise diagonal an den Enden der Fördereinheiten platzierten Sensoreinheiten kann eine Reduktion der Grundfläche, die vertikal projizierte Fläche des Freilichtraums des Ladungsträgers auf den Boden, zu einem nicht-detektierten Bereich erfordern. Dabei ist es erfindungsgemäß sehr vorteilhaft, wenn der nicht-detektierte Bereich des Sensorsystems in der Detektionsebene kleiner als 95% der Grundfläche ist. Aus dieser vorteilhaften Ausführung folgt, dass im gehobenen Zustand das direkte Umfeld außerhalb des Ladungsträgerumrisses erfasst werden kann.

Die Fördereinheiten können bevorzugt paarweise und parallel zueinander verfahren. Dies ist insbesondere dann der Fall, wenn die Fördereinheiten zusammen eine Fördereinrichtung bilden und gemeinsam einen Ladungsträger transportieren.

Die Fördereinheiten bilden vorteilhafterweise eine Fördereinrichtung, wenn sich jeweils zwei beliebige Fördereinheiten zu einer Fördereinrichtung synchronisieren.

Vorteil dieser Fördereinrichtung ist es, dass eine defekte Fördereinheit von einer beliebigen anderen Fördereinheit ersetzt werden kann und diese gemeinsam mit der nicht defekten Fördereinheit eine neu Fördereinrichtung bilden kann.

Die Fördereinrichtung kann intelligent und dezentral gesteuert werden, sodass ein platzarmes Sortieren und Verfahren von Ladungsträgern in beispielsweise Logistikbetrieben ermöglicht wird. Dies hätte zur Folge, dass Flächen, welche zum Sortieren der Paletten benötigt werden, eingespart werden könnten.

Ferner können die Fördereinheiten bevorzugt unterhalb der Ladungsträger, welche hintereinander gereiht einen Lichttunnel erzeugen, durch jenen Tunnel hindurchfahren. Eine derartige Weiterbildung ermöglicht es beispielsweise einen Lastkraftwagen innerhalb eines Prozessschrittes zu Be- und/oder zu Entladen.

Des Weiteren ermöglicht eine intelligente Steuerung ein Verfahren in Kolonnenzügen, welches unter dem Begriff ,Platooning' im Lastkraftwagenverkehr bekannt ist. Hierbei bilden mehrere Fördereinrichtungen ein Fördersystem bzw. eine Fördereinheitsflotte. Die einzelnen Fördereinheiten des Fördersystems bzw. der Fördereinheitsflotte können dabei beliebigen Fördereinrichtungen zugeordnet werden.

Äußerst vorteilhaft ist es, wenn die Fördereinheiten ihren Ladestatus selbstständig überwachen können und sich bei einem niedrigen Energiestatus autonom zur Energieladestation begeben, um dort wieder aufgeladen zu werden.

Weitere Merkmale und Vorteile der Erfindung ergeben sich aus der nachfolgenden Beschreibung von Ausführungsbeispielen und anhand der Zeichnungen. Die Zeichnungen zeigen:
- Figur 1: eine perspektivische Ansicht eines ersten Ausführungsbeispiels einer Fördereinrichtung, welche vor der Einfahrt in einen Ladungsträger dargestellt ist;
- Figur 2: eine schematische Draufsicht auf eine Fördereinheit der Fördereinrichtung des ersten Ausführungsbeispiels;
- Figur 3: eine weitere Ansicht des Ausführungsbeispiels aus Figur 2;
- Figur 4: eine schematische Seitenansicht der Fördereinheit im nicht-gehobenen Zustand mit einer Detektionsebene;
- Figur 5: eine schematische Seitenansicht der Fördereinheit im gehobenen Zustand mit einer Detektionsebene;
- Figur 6: eine schematische Seitenansicht der Fördereinheit unterhalb eines Ladungsträgers, welcher sich im nicht-gehobenen Zustand befindet;
- Figur 7: eine schematische Seitenansicht der Fördereinheit unterhalb eines Ladungsträgers, welcher sich im gehobenen Zustand befindet;
- Figur 8: eine schematische Draufsicht auf das erste Ausführungsbeispiel der Fördereinrichtung mit einem Ladungsträger;
- Figur 9: eine weitere schematische Draufsicht auf die Fördereinheit.

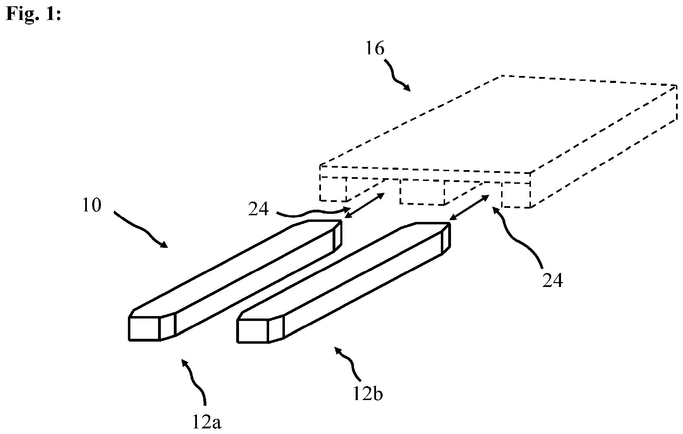

Fig. 1 zeigt eine Fördereinrichtung (10), bestehend aus zwei unabhängigen Fördereinheiten (12). Beide Fördereinheiten (12) fahren unter den Freilichtraum (24) des Ladungsträgers (16), welcher in diesem Fall in Form einer Palette dargestellt ist. Jede Fördereinheit (12) der Fördereinrichtung (10) kann den Ladungsträger (16) durch eine Hub-/Senkeinrichtung anheben und den Ladungsträger (16) im angehobenen Zustand zu einem Zielort verfahren.

Die nicht dargestellte Hub-/Senkeinheit ist für das Anheben und Absenken eines Tragelementes vorgesehen und kann unabhängig vom Antriebssystem der jeweiligen Fördereinheit (12) arbeiten. Es ist denkbar, dass das Tragelement im Querschnitt als T- Profil oder L-Profil ausgeprägt ist.

Das nicht dargestellte Antriebssystem besteht aus mindestens einem Antriebsmodul, welches mindestens eine Bodenrolle der jeweiligen Fördereinheit frei und unabhängig antreibt. Das Antriebssystem und/oder jedes Antriebsmodul kann vorteilhafterweise auch eine Lenkeinheit umfassen, mittels welcher eine Lenkbewegung der jeweiligen Fördereinheit gesteuert werden kann.

Mindestens zwei Fördereinheiten bilden eine Fördereinrichtung, wobei sich jeweils zwei beliebige Fördereinheiten zu einer Fördereinrichtung synchronisieren können.

Jede Fördereinheit (12) kann frei und unabhängig von der jeweils anderen Fördereinheit (12) verfahren. Somit kann jede Fördereinheit (12) sich eigenständig bewegen und bei einem Förderauftrag sich an einer beliebigen Stelle mit einer beliebigen anderen Fördereinheit eines Fördersystems zu einer Fördereinrichtung (10) synchronisieren.

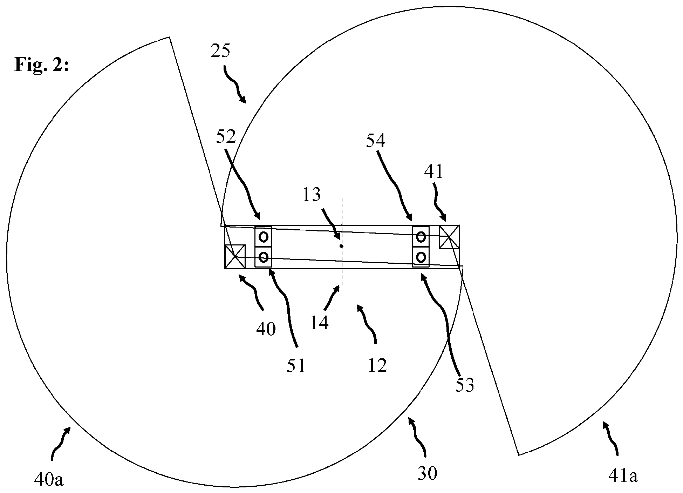

Fig. 2 zeigt die Fördereinheit (12) schematisch von oben. Eine Fördereinheit (12) besitzt im dargestellten Ausführungsbeispiel mindestens zwei Sensoreinheiten (40, 41), welche gemeinsam ein Sensorsystem (25) bilden. Die jeweiligen Detektionsbereiche der Sensoreinheiten (40, 41) sind in Fig. 2 dargestellt und durch die Bereiche (40a) und (41a) gekennzeichnet. Die überlagerten Bereiche werden von beiden Sensoreinheiten (40, 41) erfasst. Des Weiteren ist das Antriebssystem (30) eingezeichnet, welches im gezeigten Ausführungsbeispiel aus vier einzelnen Antriebseinheiten (51, 52, 53, 54) besteht. In bevorzugter Bauweise umfasst jede dieser Antriebseinheiten jeweils eine Bodenrolle, welche um eine Hochachse frei drehbar ist. Bei der Hochachse handelt es sich bevorzugt um die vertikale Mittelachse der jeweiligen Antriebseinheit (51, 52, 53, 54).

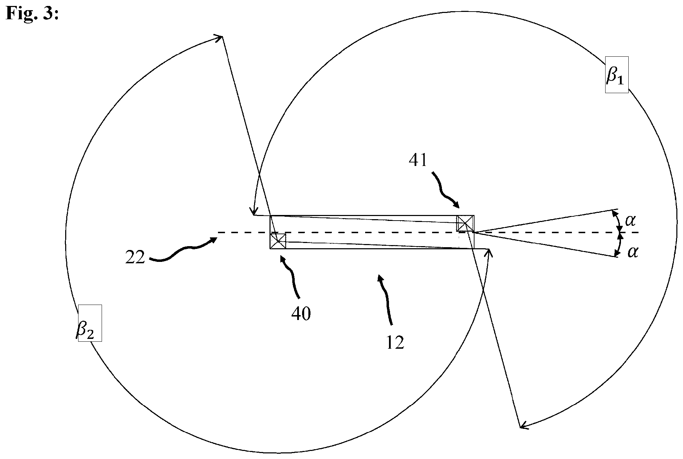

Fig. 3 zeigt die Sensoreinheiten (40, 41) des Sensorsystems (25) innerhalb der Fördereinheit (10), wobei in diesem Fall auch die Längsachse (22) der Fördereinheit (10) dargestellt ist. Der Mindestdetektionswinkel (α) ist dabei ausgehend von der Längsachse (22) eingezeichnet. Jener Mindestdetektionswinkel (α) ist bevorzugt größer 5°. Ebenso ist der Raumwinkelerfassungsbereich (β) jeder Sensoreinheit (40, 41) eingezeichnet, welcher im dargestellten Ausführungsbeispiel ca. 260° beträgt. Es ist denkbar, dass die Sensoreinheiten (40, 41) als optische Sensoreinheiten (40, 41), insbesondere als Laserscanner (40, 41) ausgebildet sind.

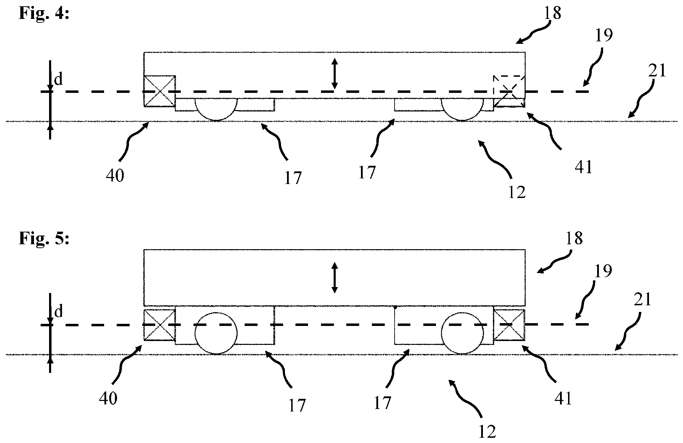

Fig. 4 zeigt die Fördereinheit (12) in der Seitenansicht im nicht-gehobenen Zustand. Der Abstand zwischen der Detektionsebene (d), die im dargestellten Ausführungsbeispiel parallel zum Boden (21) verläuft, sollte weniger als 20 cm betragen. Das Trägerelement (18) kann, durch die nicht dargestellte Hub-/Senkeinheit vertikal zum Boden (21) verfahren werden. Beispielhaft sind in Fig. 4 außerdem zwei Antriebseinheiten (17) eines Antriebssystems (30) eingezeichnet.

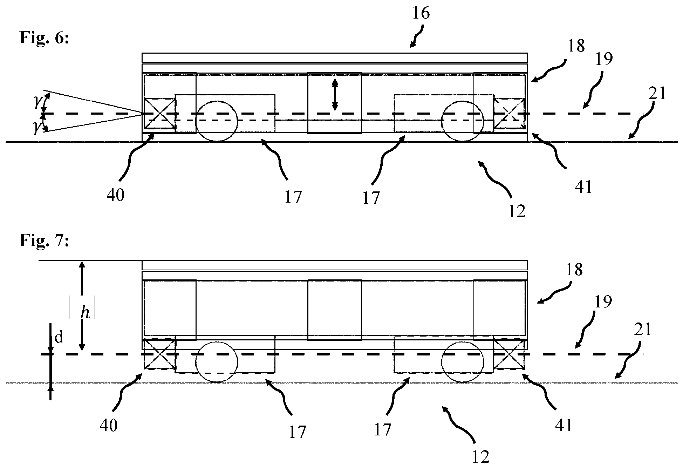

Fig. 5 zeigt die Fördereinheit (12) in der Seitenansicht im gehobenen Zustand. Im gezeigten Ausführungsbeispiel befindet sich das Tragelement (18) oberhalb der Detektionsebene (19). Fig. 6 zeigt anhand einer schematischen Seitenansicht die Fördereinheit (12), wobei diese sich im nicht-gehobenen Zustand befindet. Die Detektionslinie (19) der Sensoreinheiten (40, 41) kann, bezogen auf eine horizontale Ebene, um den Winkel (γ) bis 5° angewinkelt sein. Im dargestellten Ausführungsbeispiel beträgt der Winkel 0°. Die Detektionsebene (19) ist somit parallel zum Boden (21). In einer vorteilhaften Ausführung schneidet die Detektionslinie (19) den Ladungsträger (16) im nicht-gehobenen Zustand.

Fig. 7 zeigt eine schematische Seitenansicht die Fördereinheit (12) im gehobenen Zustand. In diesem Zustand, gegenteilig zu Figur 6, schneidet die Detektionsebene (19) den Ladungsträger nicht mehr. Die Distanz (h), zwischen der Oberkante des Ladungsträgers (16) und der Detektionsebene (19), sollte größer als 10 cm sein. Es ist dazu denkbar, dass die Sensoreinheiten (40, 41) bei einer vorteilhaften Ausführung an vertikal unbewegten Komponenten, beispielsweise dem Fahrwerk, befestigt sind.

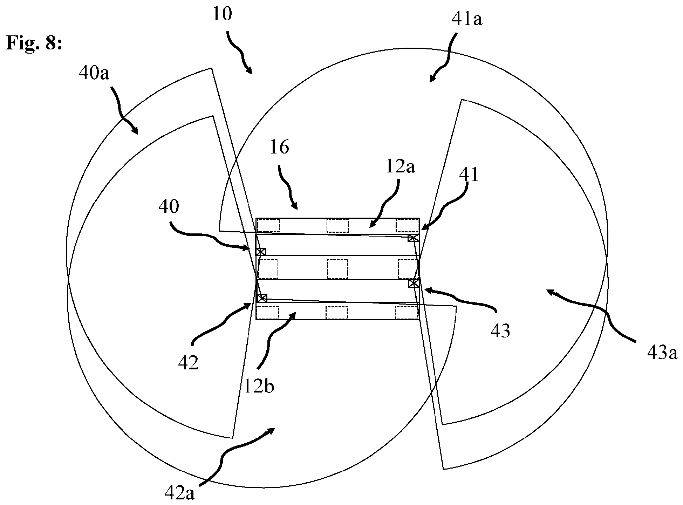

Fig. 8 zeigt eine Draufsicht auf eine Fördereinrichtung (10) mit aufgenommen Ladungsträger (16). Im dargestellten Ausführungsbeispiel ist die Fördereinrichtung (10) mit zwei Sensorsystemen (25), nämlich pro Fördereinheit (12) ein Sensorsystem (25), mit jeweils zwei Sensoreinheiten (40,41 und 42, 43) versehen. Diese Sensoreinheiten erfassen das Umfeld in den eingezeichneten Erfassungsbereichen (40a-43a). Durch die Kombination der einzelnen Erfassungsbereiche (40a-43a) ist es möglich das Umfeld in seiner Gesamtheit, also über einem Gesamterfassungsbereich von 360°, zu erfassen.

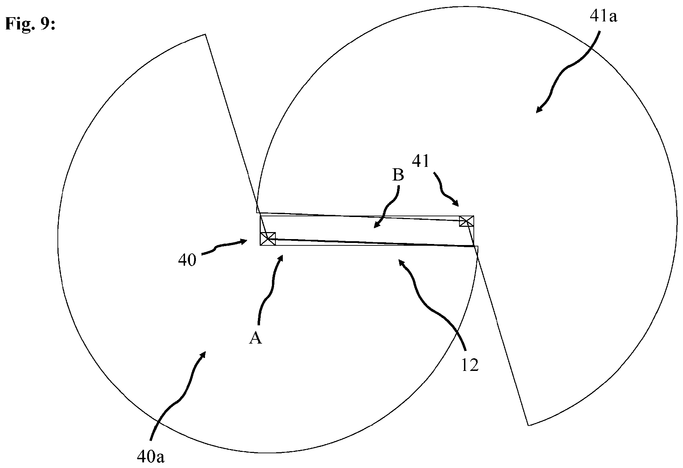

Fig. 9 zeigt eine Draufsicht auf eine Fördereinheit (12), welche zwei Sensoreinheiten (40, 41) aufweist. Dabei ist die Grundfläche (A), eine vertikal projizierte Fläche des Freilichtraums des Ladungsträgers auf den Boden, eingezeichnet. In der dargestellten Ausführung entspricht die Grundfläche der Fördereinheit (12) nahezu der Grundfläche (A) des Freilichtraums. Zudem ist die nicht-detektierte Fläche (B) eingezeichnet. Diese Fläche (B) ist von Erfassungsbereichen (40a) und (41a) eingeschlossen und in der Grundfläche A enthalten. In der beispielhaften Ausführung entspricht die Fläche (B) der Form eines Parallelogramms.

### Bezugszeichenliste

- 10: Fördereinrichtung
- 10a: erste Fördereinrichtung
- 10b: zweite Fördereinrichtung
- 12: Fördereinheit
- 12a: erste Fördereinheit
- 12b: zweite Fördereinheit
- 16: Ladungsträger
- 17: Antriebseinheit
- 18: Tragelement
- 19: Detektionsebene
- 21: Boden
- 22: Längsachse einer Fördereinheit
- 24, 26: Freilichtraum des Ladungsträgers
- 25: Sensorsystem
- 30: Antriebssystem
- 40 - 43: Sensoreinheiten
- 40a - 43a: Erfassungsbereiche der jeweiligen Sensoreinheiten
- 51-54: Antriebseinheit
- 60: Bahnkurve der Fördereinrichtung
- 60a: Bahnkurve der ersten Fördereinheit
- 60b: Bahnkurve der zweiten Fördereinheit
- 66: Objekte
- 67: Zielposition

- α: Mindestdetektionswinkel
- β: Raumwinkelerfassungsbereich
- γ: Kippwinkel
- A: Grundfläche
- B: Fläche
- d: Abstand zwischen Boden und Detektionsebene
- h: Distanz zwischen der Oberkante des Ladungsträgers und der Detektionsebene

## Patentansprüche

1. Fördereinrichtung (10) zum Fördern eines beladenen oder unbeladenen Ladungsträgers (16), und Ladungsträger, welcher eine Palette ist, wobei die Palette zwei Lichtraumtunnel in Längs-Orientierung aufweist, wobei die Fördereinrichtung
- eine erste Fördereinheit (12a) und eine zweite Fördereinheit (12b) aufweist, wobei jede Fördereinheit (12a, 12b) in ihrer Dimension so ausgestaltet ist, dass sie in einen Lichtraumtunnel der Palette einfahren kann, wobei
- jede Fördereinheit (12a, 12b) aus einem Fahrwerk, mindestens einem Tragelement (18) zum Abstützen des Ladungsträgers (16), mindestens einer Hub-/Senkeinheit zum Heben und Senken des Tragelements, einem Sensorsystem (25) zur Detektion von Umgebungsparametern und mindestens einem Antriebsystem (30), welches mindestens eine Bodenrolle der Fördereinheit (12a, 12b) antreibt, besteht, und
- jede Fördereinheit (12a, 12b) relativ zur jeweils anderen Fördereinheit (12a, 12b) und unabhängig von der jeweils anderen Fördereinheit (12a, 12b) entlang einer beliebigen Fahrtrichtung bewegbar ist,
**dadurch gekennzeichnet, dass**
- das Umfeld der Fördereinrichtung (10) durch die Anordnung des Sensorsystems (25) in beiden Fördereinheiten (12) im gehobenen Zustand mit einer Detektionsebene (19) unterhalb des Ladungsträgers (16) erfasst werden kann und im nicht-gehobenen Zustand die Detektionsebene den Ladungsträger (16) schneidet.

2. Fördereinrichtung nach Anspruch 1, **dadurch gekennzeichnet, dass** das Sensorsystem (25) eine optische Sensoreinheit (40), welche laserlichtbasiert und/oder kamerabasiert ist, umfasst.

3. Fördereinrichtung nach einem der vorhergehenden Ansprüche, **dadurch gekennzeichnet, dass** das Sensorsystem (25) mindestens zwei Sensoreinheiten (40, 41) mit zumindest teilweise unterschiedlichen Erfassungsbereichen umfasst.

4. Fördereinrichtung nach einem der vorhergehenden Ansprüche, **dadurch gekennzeichnet, dass** das Sensorsystem (25) vertikal unabhängig vom Tragelement (18) angeordnet ist.

5. Fördereinrichtung nach einem der vorhergehenden Ansprüche, **dadurch gekennzeichnet, dass** das Sensorsystem (25) die Umgebungsparameter innerhalb der Detektionsebene in einen Raumwinkelbereich (a) > ±5° zur Längsachse (21) der jeweiligen Fördereinheit (12a, 12b) detektiert.

6. Fördereinrichtung nach einem der vorhergehenden Ansprüche, **dadurch gekennzeichnet, dass** mindestens eine Sensoreinheit des Sensorsystems (25) innerhalb der Detektionsebenen einen Erfassungsbereich (ß) zwischen 180° und 280°, insbesondere zwischen 250° und 270°, aufweist.

7. Fördereinrichtung nach einem der Ansprüche 1 bis 6, **dadurch gekennzeichnet, dass** ein Kippwinkel (y) zwischen der Detektionsebene (19) und einer zum Boden (21) parallel angeordneten Ebene < ±5° ist.

8. Fördereinrichtung nach einem der vorhergehenden Ansprüche, **dadurch gekennzeichnet, dass** die Umgebungsparameter des Sensorsystems (25) aus der Zusammenschau aller, durch die einzelnen Sensoreinheiten detektierten, Umgebungsparameter bestimmt werden.

9. Fördereinrichtung nach einem der Ansprüche 3 bis 8, **dadurch gekennzeichnet, dass** die Sensoreinheiten (40,41) diagonal an den Enden der Fördereinheiten (12a, 12b), vorzugsweise punktgespiegelt um den Mittelpunkt der Fördereinheit (12a, 12b), zueinander verbaut sind.

10. Fördereinrichtung nach einem der Ansprüche 3 bis 9, **dadurch gekennzeichnet, dass** eine Fläche (B), welche durch die Erfassungsbereiche der Sensoreinheiten (40, 41) begrenzt wird, innerhalb der Detektionsebene (19) < 95% einer Grundfläche (A) ist, wobei die Grundfläche (A) eine in die Detektionsebene (19) projizierte Fläche eines Freilichtraumes des Ladungsträgers (16) ist.

11. Fördereinrichtung nach einem der vorhergehenden Ansprüche, **dadurch gekennzeichnet, dass** im gehobenen Zustand die Distanz (h), zwischen der Oberkante des Ladungsträgers (16) und der Detektionsebene (19), größer als 10 cm ist.

12. Fördereinrichtung nach einem der vorhergehenden Ansprüche, **dadurch gekennzeichnet, dass** der nicht-gehobene Zustand der Fördereinheit (12a, 12b) dem Zustand minimaler Höhe der Fördereinheit (12a, 12b) entspricht.

13. Fördereinrichtung nach einem der vorhergehenden Ansprüche, **dadurch gekennzeichnet, dass** mehrere Fördereinrichtungen (10) ein Fördersystem zum Fördern von mehreren Ladungsträgern (16) bilden, wobei die einzelnen Fördereinheiten (12a, 12b) beliebigen Fördereinrichtungen (10) zugeordnet werden können.

14. Verfahren zur Erfassung von Umgebungsparametern einer Fördereinrichtung (10) nach einem der vorhergehenden Ansprüche, **dadurch gekennzeichnet, dass** die Umgebungsparameter innerhalb einer Detektionsebene erfasst werden, welche dazu ausgebildet ist, sich unter einem, durch die Fördereinrichtung (10) angehobenen, Ladungsträger hindurch zu erstrecken.

## Claims

1. Conveying device (10) for conveying a loaded or unloaded load carrier (16), and a load
carrier, which is a palette, wherein the palette has two clearance tunnels in a longitudinal orientation, wherein the conveying device comprises:
- a first conveying unit (12a) and a second conveying unit (12b), wherein each conveying unit (12a, 12b) is dimensioned such that it can enter a clearance tunnel of the palette, wherein
- each conveying unit (12a, 12b) consists of a chassis, at least one supporting element (18) for supporting the load carrier (16), at least one lifting/lowering unit for lifting and lowering the supporting element, a sensor system (25) for detecting environmental parameters and at least one drive system (30) which drives at least one floor roller of the conveying unit (12a, 12b), and
- each conveying unit (12a, 12b) is movable relative to the respective other conveying unit (12a, 12b) and independently of the respective other conveying unit (12a, 12b) along any direction of travel,
**characterised in that**
- the environment of the conveying device (10) can be detected by the arrangement of the sensor system (25) in both conveying units (12) in the raised state with a detection plane (19) below the load carrier (16) and in the non-raised state the detection plane intersects the load carrier (16).

2. Conveying device according to claim 1, **characterised in that** the sensor system (25) comprises an optical sensor unit (40) which is laser light-based and/or camera-based.

3. Conveying device according to any one of the preceding claims, **characterised in that** the sensor system (25) comprises at least two sensor units (40, 41) with at least partially different detection ranges.

4. Conveying device according to any one of the preceding claims, **characterised in that** the sensor system (25) is arranged vertically independent of the support element (18).

5. Conveying device according to any one of the preceding claims, **characterised in that** the sensor system (25) detects the environmental parameters within the detection plane in a solid angle range (α) ≥ ±5° to the longitudinal axis (21) of the respective conveying unit (12a, 12b).

6. Conveying device according to any one of the preceding claims, **characterised in that** at least one sensor unit of the sensor system (25) has a detection range (β) between 180° and 280°, in particular between 250° and 270°, within the detection planes.

7. Conveying device according to any one of claims 1 to 6, **characterised in that** a tilt angle (γ) between the detection plane (19) and a plane parallel to the ground (21) is ≤ ±5°.

8. Conveying device according to any one of the preceding claims, **characterised in that** the environmental parameters of the sensor system (25) are determined from the synopsis of all environmental parameters detected via the individual sensor units.

9. Conveying device according to any one of the claims 3 to 8, **characterised in that** the sensor units (40, 41) are installed diagonally to one another at the ends of the conveying units (12a, 12b), preferably point-mirrored about the centre of the conveying unit (12a, 12b).

10. Conveying device according to any one of the claims 3 to 9, **characterised in that** an area (B), which is delimited by the detection areas of the sensor units (40, 41), within the detection plane (19) is < 95% of a footprint (A), wherein the footprint (A) is an area of a profile of the load carrier (16) projected into the detection plane (19).

11. Conveying device according to any one of the preceding claims, **characterised in that** in the raised state the distance (h) between the upper edge of the load carrier (16) and the detection plane (19) is greater than 10 cm.

12. Conveying device according to any one of the preceding claims, **characterised in that** the non-raised state of the conveying unit (12a, 12b) corresponds to the state of minimum height of the conveying unit (12a, 12b).

13. Conveying device according to any one of the preceding claims, **characterised in that** a plurality of conveying devices (10) form a conveying system for conveying a plurality of load carriers (16), wherein the individual conveying units (12a, 12b) can be assigned to any conveying devices (10).

14. A method of detecting environmental parameters of a conveying device (10) according to any one of the preceding claims, **characterised in that** the environmental parameters are detected within a detection plane adapted to extend under a load carrier lifted by the conveying device (10).

## Revendications

1. Dispositif de transport (10) destiné à transporter un support de charge (16) chargé ou non chargé, et support de charge consistant en une palette, ladite palette présentant deux tunnels d'insertion dans son orientation longitudinale, ledit dispositif de transport
- présentant une première unité de transport (12a) et une deuxième unité de transport (12b), chaque unité de transport (12a, 12b) étant conçue, du fait de ses dimensions, pour entrer dans un tunnel d'insertion, étant entendu que
- chaque unité de transport (12a, 12b) consiste en un châssis, au moins un élément porteur (18) destiné à supporter le support de charge (16), au moins une unité de levage/abaissement destinée à lever et abaisser l'élément porteur, un système de détection (25) destiné à la détection de paramètres environnementaux et au moins un système d'entraînement (30) qui entraîne au moins une roulette au sol de l'unité de transport (12a, 12b), et
- chaque unité de transport (12a, 12b) est mobile par rapport à l'autre unité de transport (12a, 12b) et indépendamment de l'autre unité de transport (12a, 12b) selon un sens de déplacement,
**caractérisé en ce que**
- l'environnement du dispositif de transport (10) peut être détecté par la mise en place du système de détection (25) dans les deux unités de transport (12) à l'état levé avec un plan de détection (19) situé sous le support de charge (16), et à l'état non levé le plan de détection coupe le support de charge (16).

2. Dispositif de transport selon la revendication 1, **caractérisé en ce que** le système de détection (25) comprend une unité de détection optique (40) reposant sur une lumière laser et/ou une caméra.

3. Dispositif de transport selon l'une des revendications précédentes, **caractérisé en ce que** le système de détection (25) comprend au moins deux unités de détection (40, 41) comportant des zones de détection au moins partiellement différentes.

4. Dispositif de transport selon l'une des revendications précédentes, **caractérisé en ce que** le système de détection (25) est agencé verticalement, indépendamment de l'élément porteur (18).

5. Dispositif de transport selon l'une des revendications précédentes, **caractérisé en ce que** le système de détection (25) détecte les paramètres environnementaux à l'intérieur du plan de détection dans une plage angulaire spatiale (α) ≥ ±5° par rapport l'axe longitudinal (21) de l'unité de transport (12a, 12b) respective.

6. Dispositif de transport selon l'une des revendications précédentes, **caractérisé en ce qu'**au moins une unité de détection du système de détection (25) présente, à l'intérieur des plans de détection, une zone de détection (β) comprise entre 180° et 280°, notamment entre 250° et 270°.

7. Dispositif de transport selon l'une des revendications 1 à 6, **caractérisé en ce qu'**un angle de basculement (γ) compris entre le plan de détection (19) et un plan parallèle au sol (21) fait < ±5°.

8. Dispositif de transport selon l'une des revendications précédentes, **caractérisé en ce que** les paramètres environnementaux du système de détection (25) sont déterminés à partir de la prise en compte conjointe de tous les paramètres environnementaux détectés par les différentes unités de détection.

9. Dispositif de transport selon l'une des revendications 3 à 8, **caractérisé en ce que** les unités de détection (40, 41) sont mises en œuvre diagonalement aux extrémités des unités de transport (12a, 12b), de préférence en symétrie ponctuelle autour du centre de l'unité de transport (12a, 12b).

10. Dispositif de transport selon l'une des revendications 3 à 9, **caractérisé en ce qu'**une surface (B) délimitée par les zones de détection des unités de détection (40, 41) et située à l'intérieur du plan de détection (19) est < 95 % d'une surface de base (A), ladite surface de base (A) étant une surface, projetée dans le plan de détection (19), d'un espace d'insertion du support de charge (16).

11. Dispositif de transport selon l'une des revendications précédentes, **caractérisé en ce que**, à l'état levé, la distance (h) comprise entre le bord supérieur du support de charge (16) et le plan de détection (19) est supérieure à 10 cm.

12. Dispositif de transport selon l'une des revendications précédentes, **caractérisé en ce que** l'état non levé de l'unité de transport (12a, 12b) correspond à l'état de hauteur minimale de l'unité de transport (12a, 12b).

13. Dispositif de transport selon l'une des revendications précédentes, **caractérisé en ce que** plusieurs dispositifs de transport (10) forment un système de transport permettant de transporter plusieurs supports de charge (16), les unités de transport (12a, 12b) respectives pouvant être associées à de quelconques dispositifs de transports (10).

14. Procédé de détection de paramètres environnementaux d'un dispositif de transport (10) selon l'une des revendications précédentes, **caractérisé en ce que** les paramètres environnementaux sont détectés à l'intérieur d'un plan de détection conçu pour s'étendre sous un support de charge soulevé par le dispositif de transport (10).
